# EUROPEAN PATENT APPLICATION

(11) **EP 4 757 108 A1**
(43) Date of publication of application: **10.06.2026**
(21) Application number: 25155903.5
(22) Date of filing: 05.02.2025
(51) Int. Cl.: H02J 7/00

(54) **CHARGING BOX WITH INTEGRATED DISPLAY AND SAME-END CHARGING ELECTRODES**

(30) Priority: 06.12.2024 CN 202423024922 U
(71) Applicant: Guangdong JVEnergy Co., Ltd, Zhaoqing City, Guangdong Province (CN)
(72) Inventor: Wu, Cuichao, Zhaoqing, Guangdong (CN); Qin, Yan, Zhaoqing, Guangdong (CN); Qin, Shuyong, Zhaoqing, Guangdong (CN); Huang, Zhihua, Zhaoqing, Guangdong (CN)
(74) Representative: Sun, Yiming

(57) **Abstract**

Disclosed is a charging box capable of displaying an electric quantity and charging at a same end, including: a box body, a control panel, a charging positive electrode and a charging negative electrode, wherein a charging bin for placing a battery is provided in the box body, and the charging positive electrode and the charging negative electrode are located at the same end of the charging bin. When charging, there is no need to compress both ends of the battery. Thus, the charging is more convenient, and there is no need to set a charging line at the both ends of the charging bin. The structure and production process of the product will be simpler. In addition, by providing a display screen on the box body, it is convenient for a user to grasp the electric quantity of the battery at any time, and it is more convenient to use.

## Description

### Technical Field

The application falls within the field of portable power supply products, and particularly relates to a charging box capable of displaying an electric quantity and charging at the same end.

### Background Art

For reusable lithium-ion, nickel-hydrogen, nickel-cadmium and other dry batteries, it is usually necessary to use a charging box to charge them.

At present, the battery box for charging the dry battery usually only uses the 220 V household power supply to charge the battery, and there is no way to charge other electronic products by the battery, which has the defect of single use state.

To solve this problem, the patent with the application number of 201821612469.0 discloses a portable charging and power supply device for detachable standard batteries, including a housing, a PCB board, a positive electrode sheet and a negative electrode sheet connected to the PCB board, and a discharge interface and a charge interface provided on the PCB board, wherein a cylindrical or square standard lithium battery can be placed in the housing, and the lithium battery can be taken out and used. The charging box can not only charge the standard lithium battery via the charge interface, but also charge the external electronic product using the standard lithium battery via the discharge interface, so that the use state of the charging box can be increased and the application scene of the charging box can be expanded.

However, in the charging box disclosed in the above-mentioned patent, the positive and negative electrodes charged therein are located at two ends of a charging bin. During charging, both ends of the battery are required to be compressed in the charging bin in order to enable the battery to be tightly connected to the positive and negative electrodes charged by the PCB plate. Meanwhile, when the charging positive and negative electrodes are respectively located at both ends, both ends of the charging bin are required to be equipped with a charging line, so that the structure of the product is more complex and the production is more cumbersome.

### Summary of the Invention

In order to solve the above-mentioned problems, the primary object of the application is to provide a charging box capable of displaying an electric quantity and charging at a same end, so as to facilitate a user to observe the electric quantity of a battery;

Another object of the application is to provide a charging box capable of displaying an electric quantity and charging at a same end, wherein the charging positive and negative electrodes are located at the same end of the charging bin. When charging, there is no need to compress two ends of the battery, so the charging is more convenient.

Another object of the application is to provide a charging box capable of displaying an electric quantity and charging at a same end, which can simplify the structure and production process of the product without providing charging lines at both ends of the charging bin.

In order to achieve the above purpose, the application adopts the following technical solution.

The application provides a charging box capable of displaying an electric quantity and charging at a same end. The charging box includes a box body, a control panel, a charging positive electrode, and a charging negative electrode connected to the control panel, wherein a charging bin for placing a battery is provided in the box body, and the charging positive electrode and the charging negative electrode are located at the same end of the charging bin; and a display screen is also mounted on the outer side surface of the box body and electrically connected to the control panel.

Further, an opening for taking and placing a battery is provided at an upper end of the charging bin; and the charging positive electrode and the charging negative electrode are provided at a lower end of the charging bin. The user can put the battery into the charging bin from the opening or take the battery out of the charging bin. When the battery is put in, the positive electrode and the negative electrode at the lower end of the battery are respectively connected to the charging positive electrode and the charging negative electrode of the charging box, and only the lower end needs to be close to the charging bin to ensure normal charging, thereby making the charging process more convenient.

Further, the control panel is provided with a first conductive column; the bottom of the first conductive column is electrically connected to the control panel; and the upper end of the first conductive column forms the charging negative electrode; the middle part of the first conductive column is provided with a hole site penetrating up and down which is provided with a second conductive column separated from the first conductive column; the lower end of the second conductive column is electrically connected to the control panel; and the upper end of the second conductive column forms the charging positive electrode.

Further, the first conductive column is a column of an annular structure and the second conductive column is a conductive contact pin; and the conductive contact pin is provided in the annular structure of the column and separated from the column, so as to ensure the stability of the charging structure and save the space occupied by the conductive contact pin, facilitating the reduction of the volume of the product and facilitating the portable use of the product.

Further, the control panel is further connected with a bi-directional charge interface which penetrates and emerges from the box body. In the present application, the charging box can charge a standard battery via a bi-directional charge interface, and can also charge an external electronic product using the standard battery via the bi-directional charge interface, so that the charging box has the functions of battery charging and external electronic product power supply at the same time, and can increase the use state of the charging box and expand the application scene of the charging box.

Further, a wireless charging coil is further installed on the box body; and the wireless charging coil is electrically connected to the control panel and can wirelessly charge the electronic product by the wireless charging coil.

Further, the box body includes an upper cover and a bottom shell; the upper cover is provided with an upper inner liner therein, and the upper cover is fixedly connected to the upper inner liner; a bottom inner liner is provided in the bottom shell which is fixedly connected to the bottom inner liner; wherein one end of the upper inner liner is rotatably connected to the bottom inner liner, and the other end thereof is connected to the bottom inner liner in an open-close manner, so that the upper cover and the bottom shell form a flip-type connection structure.

Further, the lower end of the upper inner liner is provided with a rotation protrusion; both ends of the rotation protrusion are provided with a rotary shaft; the upper end of the bottom inner liner is provided with a rotary position; a side wall of the rotary position is provided with a shaft hole; the rotation protrusion is movably arranged in the rotary position; and the rotary shaft is movably provided in the shaft hole.

Further, the mounting groove is provided with one or more to charge one or more dry batteries at the same time.

Compared with the prior art, the charging box of the application is provided with a charging positive electrode and a charging negative electrode at the same end of the charging bin, and is provided with a battery capable of charging at the same end, so that the charging is more convenient without compressing two ends of the battery during charging. At the same time, the charging box with this structure design does not need to set charging lines at both ends of the charging bin. The structure and production process of the product will be simpler. In addition, by providing a display screen, it is convenient for the user to grasp the electric quantity of the battery at any time, enhancing usability.

### Brief Description of the Drawings

Fig. 1 is an isometric view of a first view of a charging box.
Fig. 2 is an isometric view of a second view of the charging box.
Fig. 3 is an exploded view of the charging box.
Fig. 4 is a top view of the charging box.
Fig. 5 is a cross-sectional view at A-A in Fig. 4.
Fig. 6 is a structurally schematic view of a control panel.
Fig. 7 is a schematic view of a structure of an upper cover, a bottom shell, an upper inner liner, and a bottom inner liner.
Fig. 8 is a structurally schematic view of a battery in this embodiment.

In the drawings: 1, box body; 2, control panel; 3, charging positive electrode; 4, charging negative electrode; 5, charging bin; 51, opening; 6, first conductive column; 61, hole site; 7, second conductive column; 8, bi-directional charge interface; 9, display screen; 10, wireless charging coil; 11, upper cover; 111, first fastening groove; 12, bottom shell; 121, second fastening groove; 13, upper inner liner; 131, first buckle; 14, bottom inner liner; 141, second buckle; 15, rotation protrusion; 16, rotary shaft; 17, rotary position; 18, shaft hole; 100, battery; 101, positive electrode; 102, negative electrode.

### Detailed Description of the Invention

In order that the objects, aspects and advantages of the application will become more apparent, a more particular description of the application will be provided with reference to the appended drawings and the embodiments. It should be understood that the specific embodiments described herein are illustrative only and are not limiting the application.

In order to achieve the above purpose, the application adopts the following technical solution.

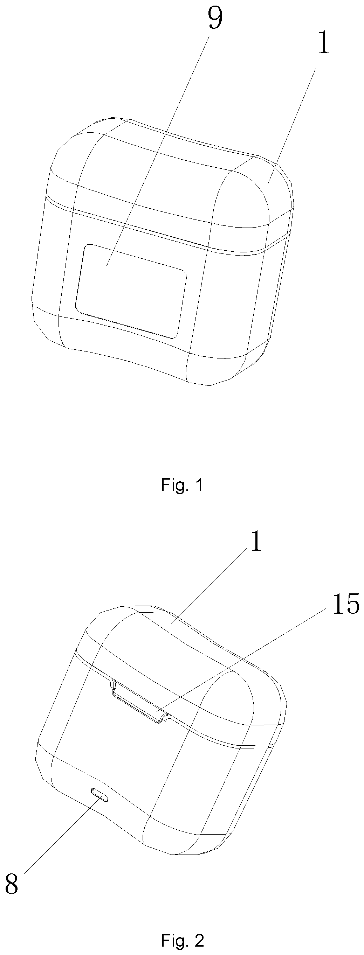

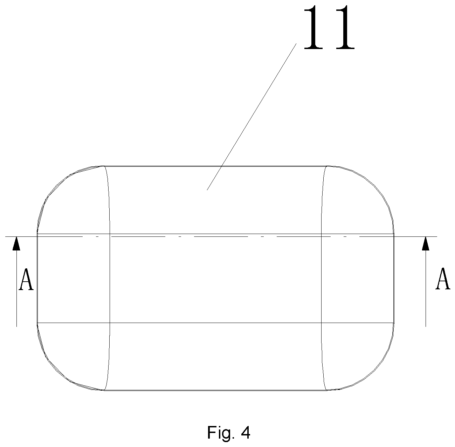

With reference to Figs. 1-7, the present embodiment provides a charging box capable of displaying an electric quantity and charging at a same end, including: a box body 1, a control panel 2, and a charging positive electrode 3 and a charging negative electrode 4 connected to the control panel 2, wherein a charging bin 5 for placing a battery 100 is provided in the box body 1, and the charging positive electrode 3 and the charging negative electrode 4 are located at the same end of the charging bin 5.

A display screen 9 is also mounted on the outer side of the box body 1, and the display screen 9 is electrically connected to the control panel 2 and can be used for displaying the electric quantity of the battery 100 so as to facilitate a user to know the charging state of the battery 100.

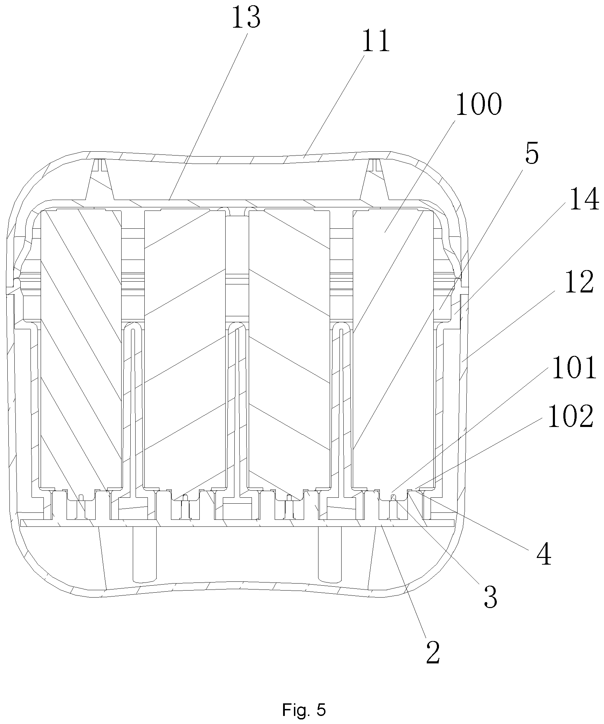

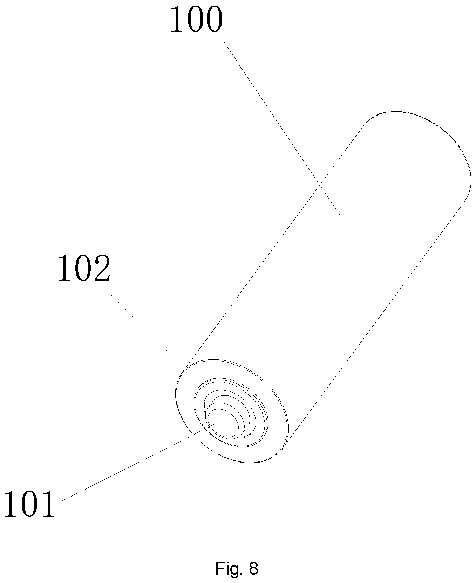

Referring to Fig. 8, in the present embodiment, standard lithium-ion, nickel-metal hydride, nickel-cadmium, or the like dry batteries of No. 1, No. 2, No. 5, and No. 7, in which the positive electrode and the negative electrode are provided at the same end at 1.5 V, 3 V, and 9 V, can be used. With reference to Fig. 5, when the dry battery is installed in the charging bin 5, the positive electrode 101 of the battery 100 is in contact with the charging positive electrode 3 of the charging box, and the negative electrode 102 of the battery 100 is in contact with the charging negative electrode 4 of the charging box. During the charging, there is no need to compress both ends of the battery 100, making the charging process more convenient. At the same time, the charging box with this structural design does not need to provide a charging line at the both ends of the charging bin 5, simplifying both the structure and production process of the product.

Specifically, the control panel 2 adopts a multi-functional PCB board, and has a charge/discharge protection function and a charge/discharge control function.

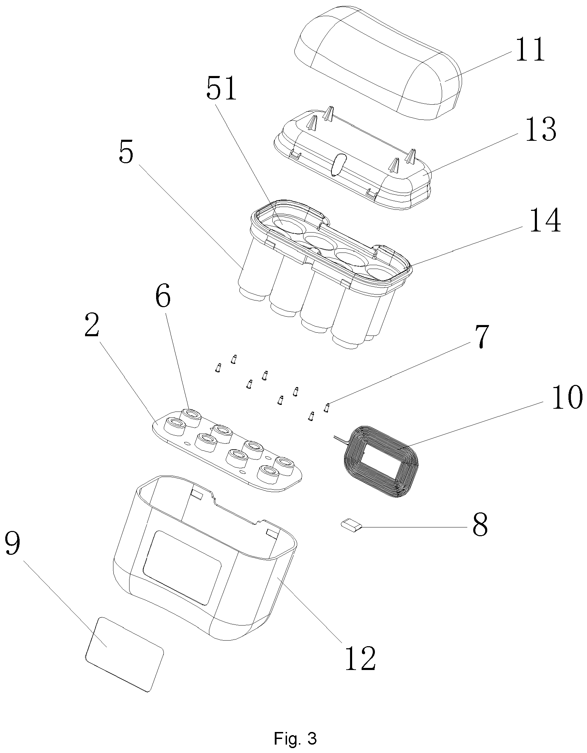

Specifically, referring to Fig. 3, the upper end of the charging bin 5 is provided with an opening 51 for taking and placing the battery 100. The control panel 2 is provided at the lower end of the charging bin 5. Accordingly, the charging positive electrode 3 and the charging negative electrode 4 are mounted on the control panel 2 and are also provided at the lower end of the charging bin 5. During the charging, a user can put the battery 100 into the charging bin 5 from the opening 51. After the charging, the battery 100 is taken out from the opening 51. When the battery 100 is put in, the positive electrode and the negative electrode at the lower end of the battery 100 are respectively connected to the charging positive electrode 3 and the charging negative electrode 4 of the charging box, and only the lower end is required to be close to the charging bin 5 to ensure normal charging, so that the charging is more convenient.

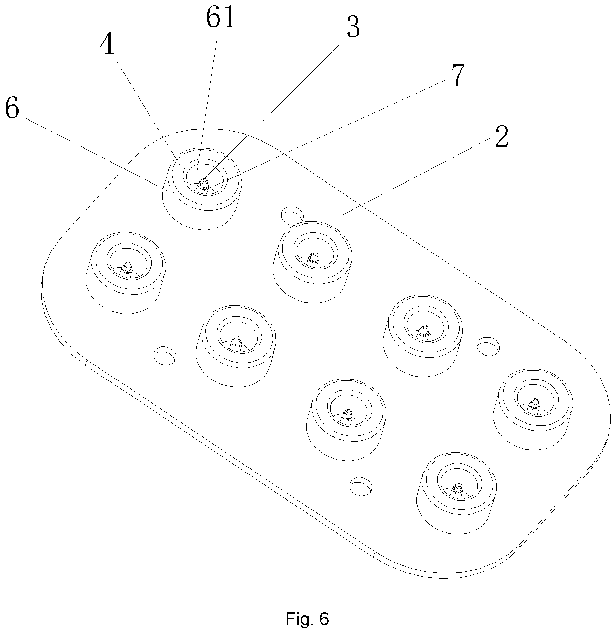

Specifically, with reference to Fig. 6, the control panel 2 is provided with a first conductive column 6. The bottom of the first conductive column 6 is electrically connected to the control panel 2, and the upper end of the first conductive column 6 forms a charging negative electrode 4. A hole site 61 penetrating up and down is provided in the middle of the first conductive column 6. A second conductive column 7 separated from the first conductive column 6 is provided in the hole site 61. A lower end of the second conductive column 7 is electrically connected to the control panel 2, and an upper end of the second conductive column 7 forms a charging positive electrode 3.

Specifically, the first conductive column 6 adopts a cylindrical body with an annular structure, and the second conductive column 7 adopts a conductive contact pin. The conductive contact pin is provided in the annular structure of the cylindrical body and is separated from the cylindrical body, which can not only ensure the stability of the charging structure, but also save the space occupied by the conductive contact pin. It is beneficial to reduce the volume of the product and facilitate the portable use of the product.

Specifically, the control panel 2 is further connected with a bi-directional charge interface 8, and the bi-directional charge interface 8 penetrates and emerges from the box body 1. In the present embodiment, the charging box can charge the standard-type battery 100 by connecting a common 5 V adapter to the bi-directional charge interface 8, and can also charge the external electronic product by using the standard-type battery 100 via the bi-directional charge interface 8, so that the charging box has the functions of charging the battery 100 and supplying power to the external electronic product at the same time, so that the use state of the charging box can be increased and the application scene of the charging box can be expanded.

Specifically, the bi-directional charge interface 8 adopts a standard TYPE-C interface, and can integrate the charging function and the discharging function into one interface, avoiding the installation of multiple electrical interfaces on the box body 1, which can simplify the structure and make the product more beautiful. It should be noted that the bi-directional charge interface 8 is prior art, and the specific implementation thereof is not described in detail in the present application.

Specifically, a wireless charging coil 10 is further mounted on the box body 1. The wireless charging coil 10 is electrically connected to the control panel 2 and can wirelessly charge the electronic product via the wireless charging coil 10.

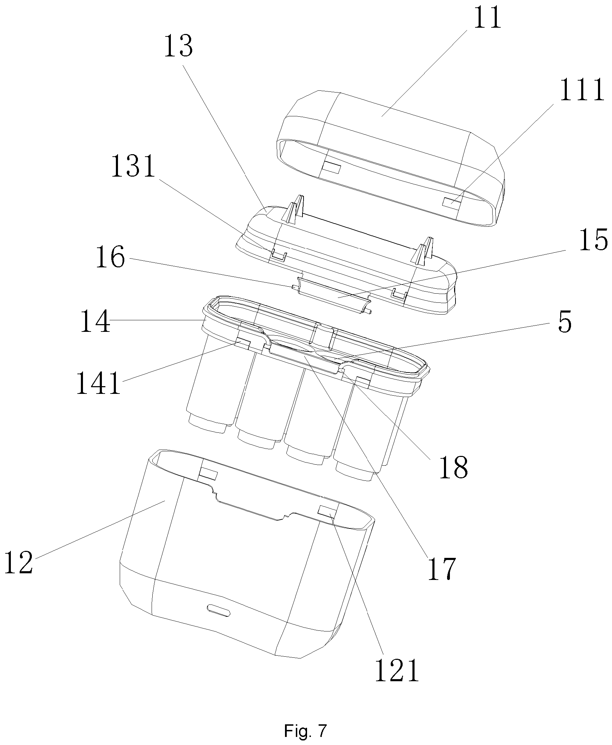

Specifically, with reference to Fig. 7, the box body 1 includes an upper cover 11 and a bottom shell 12. The upper cover 11 is provided with an upper inner liner 13 therein, and the upper cover 11 is fixedly connected to the upper inner liner 13. A bottom inner liner 14 is provided in the bottom shell 12, and the bottom shell 12 is fixedly connected to the bottom inner liner 14. One end of the upper lining body 13 is rotatably connected to the bottom inner liner 14, and the other end thereof is connected to the bottom inner liner 14 in an open-close manner, so that the upper cover 11 and the bottom shell 12 form a flip-type connection structure. One end of the opening and closing connection of the upper inner liner 13 and the bottom inner liner 14 can be realized by means of magnetic attraction, which has the advantages of stable closing and easy opening.

Specifically, the lower end of the upper inner liner 13 is provided with a rotation protrusion 15. Both ends of the rotation protrusion 15 are provided with a rotary shaft 16. The upper end of the bottom inner liner 14 is provided with a rotary position 17. A side wall of the rotary position is provided with a shaft hole 18. The rotation protrusion 15 is movably arranged in the rotary position 17. The rotary shaft 16 is movably provided in the shaft hole 18.

Specifically, the inner side surface of the upper cover 11 is provided with a first fastening groove 111. The outer side wall of the upper inner liner 13 is provided with a first buckle 131 which is snapped into the first fastening groove 111 to achieve the fixed connection between the upper cover 11 and the upper inner liner 13.

Specifically, the inner side surface of the bottom shell 12 is provided with a second fastening groove 121, and the outer side wall of the bottom inner liner 14 is provided with a second buckle 141. The second buckle 141 is snapped into the second fastening groove 121 so as to achieve the fixed connection between the bottom shell 12 and the bottom inner liner 14.

Specifically, a mounting groove is provided in the bottom inner liner 14, and the mounting groove forms the charging bin 5. The control panel 2 is provided at the bottom of the bottom inner liner 14. The bottom of the mounting groove is drilled so that the upper ends of the first conductive column 6 and the second conductive column 7 can protrude into the mounting groove.

Specifically, the mounting groove is provided with one or more to charge one or more dry batteries at the same time.

The foregoing is only preferred embodiments of the application and is not intended to limit the application. Any modifications, equivalents, and improvements within the spirit and principles of the application are intended to be included within the scope of this application.

## Claims

1. A charging box capable of displaying an electric quantity and charging at a same end, comprising: a box body, a control panel and a charging positive electrode and a charging negative electrode connected to the control panel, wherein a charging bin for placing a battery is provided in the box body, the charging positive electrode and the charging negative electrode are located at a same end of the charging bin; and a display screen is also mounted on an outer side surface of the box body and electrically connected to the control panel.

2. The charging box capable of displaying the electric quantity and charging at the same end according to claim 1, wherein an opening for taking and placing a battery is provided at an upper end of the charging bin; and the charging positive electrode and the charging negative electrode are provided at a lower end of the charging bin.

3. The charging box capable of displaying the electric quantity and charging at the same end according to claim 1, wherein the control panel is provided with a first conductive column; the bottom of the first conductive column is electrically connected to the control panel; and the upper end of the first conductive column forms the charging negative electrode; the middle part of the first conductive column is provided with a hole site penetrating up and down which is provided with a second conductive column separated from the first conductive column; the lower end of the second conductive column is electrically connected to the control panel; and the upper end of the second conductive column forms the charging positive electrode.

4. The charging box capable of displaying the electric quantity and charging at the same end according to claim 3, wherein the first conductive column is a column of an annular structure and the second conductive column is a conductive contact pin; and the conductive contact pin is provided in the annular structure of the column and separated from the column.

5. The charging box capable of displaying the electric quantity and charging at the same end according to claim 1, wherein the control panel is further connected with a bi-directional charge interface which penetrates and emerges from the box body.

6. The charging box capable of displaying the electric quantity and charging at the same end according to claim 1, wherein a wireless charging coil is further installed on the box body; and the wireless charging coil is electrically connected to the control panel.

7. The charging box capable of displaying the electric quantity and charging at the same end according to claim 3, wherein the box body comprises an upper cover and a bottom shell; the upper cover is provided with an upper inner liner therein, and the upper cover is fixedly connected to the upper inner liner; a bottom inner liner is provided in the bottom shell which is fixedly connected to the bottom inner liner; wherein one end of the upper inner liner is rotatably connected to the bottom inner liner, and the other end thereof is connected to the bottom inner liner in an open-close manner, so that the upper cover and the bottom shell form a flip-type connection structure.

8. The charging box capable of displaying the electric quantity and charging at the same end according to claim 7, wherein a mounting groove is provided in the bottom inner liner, and the mounting groove forms the charging bin; and the control panel is provided at the bottom of the bottom inner liner and the bottom of the mounting groove is drilled so that the upper ends of the first and second conductive columns can protrude into the mounting groove.

9. The charging box capable of displaying the electric quantity and charging at the same end according to claim 8, wherein the mounting groove is provided with more than one.
